# EUROPÄISCHE PATENTSCHRIFT

(11) **EP 1 101 906 B1**
(45) Veröffentlichungstag und Bekanntmachung des Hinweises auf die Patenterteilung: **26.01.2005**
(21) Anmeldenummer: 00124505.9
(22) Anmeldetag: 09.11.2000
(51) Int. Cl.: F01M 11/03

(54) **Saugölfilter für Motoren oder Getriebe oder Automatikgetriebe**
Oil filter for engine or transmission
Filtre à huile pour moteur ou transmission

(30) Priorität: 20.11.1999 DE 19955636
(43) Veröffentlichungstag der Anmeldung: 23.05.2001
(73) Patentinhaber: IBS Filtran Kunststoff-/Metallerzeugnisse GmbH, 51589 Morsbach (DE)
(72) Erfinder: Rosendahl, Marco, 51597 Morsbach (DE); Beer, Markus, 51597 Morsbach (DE)
(74) Vertreter: Lang, Friedrich, Dipl.-Ing.

(56) Entgegenhaltungen:
- EP-A- 0 337 663
- EP-A- 0 547 951
- EP-A- 0 859 147
- DE-A- 19 735 444

## Beschreibung

Gegenstand der Erfindung ist ein Saugölfilter für Motoren oder Getriebe oder Automatikgetriebe mit einem Ölfiltergehäuse, einem oberhalb des Ölfiltermediums angeordneten Fließraum und einem unterhalb des Ölfiltermediums angeordneten Fließraum und einem Ölfilterauslaß.

Aus dem Stand der Technik sind bereits verschiedene Arten von Ölfiltern für Motoren, Getriebe oder Automatikgetriebe bekannt. Die bekannten Filter bestehen im allgemeinen aus einem flachen Filtergehäuse aus zwei Halbschalen. Zwischen diesen beiden Halbschalen ist ein scheibenförmiges, oder als Tasche geformtes oder ein faltenförmiges Filtermedium, beispielsweise ein Metallsieb, ein Papierfilter oder ein Polyesterfilterfilz befestigt. Die luftdicht miteinander verbundenen Filterhalbschalen können weiter aus Metall oder Kunststoff oder einer Kombination aus Kunststoffschale oder Metallschale sein.

Die Filter werden in den unterschiedlichsten Freiräumen im Getriebe oder im Motorraum angebracht. So beschreiben beispielsweise die deutschen Patente 197 35 444.0 und 197 35 445.9 des Anmelders eine Ölwanne und einen Ölfiltereinsatz für Ölwannen, für Motoren und Getriebe, wobei der Ölfilter innerhalb der Ölwanne angeordnet wird.

Aufgrund dieser Anordnung in den unterschiedlichsten Freiräumen ergeben sich bei der Konstruktion der Ölfilterschalen Probleme, da die Filterschalen so geformt sein müssen, daß sie einerseits in den zur Verfügung stehenden Freiräumen eingepaßt werden können, wobei andererseits keine Bereiche für Luftansammlungen innerhalb des Filters entstehen sollen. Eine optimale Filterauslegung ist daher so gestaltet, daß alle Flächen und Bereiche an und im Filter durch Schrägen zum Filterauslaß hin automatisch ein Abführen der im Öl befindlichen Luft ermöglichen sollen.

Wird bei der Gestaltung der Ölfilterschalen dem Anpassen des Ölfilters an bestimmte Freiräume der Vorrang eingeräumt, können strömungsungünstige Bereiche innerhalb des Ölfilters entstehen, in denen sich Luft ansammeln kann.

Dabei entstehen diese Luftansammlungen durch starke Aufschäumung des Öles bei hohen Öldurchflüssen im Betrieb des Fahrzeuges oder auch bei geringen Öldurchflüssen im Falle des Fahrzeugstillstandes während des Betriebes, wobei nur leicht verschäumtes Öl zirkuliert. Auch nach dem Ausschalten des Fahrzeuges oder bei einer Schräglage des Fahrzeuges im Fahr- oder Ruhezustand können sich Luftansammlungen an strömungsungünstigen Stellen innerhalb des Ölfilters bilden.

Dabei kann sich die Luft im Filter unterhalb oder auch oberhalb des Filtermediums ansammeln. Die sich ansammelnde Luft im Öl bildet meistens immer größer werdende Luftblasen, die durch plötzliches Ansteigen des Saugdruckes auf einmal durch die Pumpe angesaugt werden. Dieses Ansaugen der Luft in die Pumpe äußert sich dann durch massive Kavitationsgeräusche der Pumpe. Weiterhin kann dies ein Einbruch des Öldruckes, sowie unangenehme Geräuschentwicklung des gesamten Systems oder sogar eine Beschädigung der Pumpe zur Folge haben.

Aufgrund der immer kleiner und komplizierter werdenden Freiräume innerhalb der Motoren und Getriebe zur Anbringung eines Saugölfilters ergibt sich die Notwendigkeit, auch die strömungsungünstigen Bereiche für einen solchen Filter mitzubenutzen. Dadurch entsteht automatisch die beschriebene Problematik einer Luftansammlung im Filter mit dessen nachteiligen Folgen und Störungen beim Ansaugen dieser Luft in die Pumpe.

Daher war es die technische Aufgabe der vorliegenden Erfindung, das konzentrierte Ansammeln der Luft in strömungsungünstigen Bereichen des Ölfilters zu verhindern.

Diese technische Aufgabe wird gelöst durch einen Saugölfilter für Motoren oder Getriebe oder Automatikgetriebe mit einem Ölfiltergehäuse 1, einem oberhalb des Ölfiltermediums 4 angeordneten Fließraum 5 und einem unterhalb des Olfiltermediums angeordneten Fließraum 6 und einem Ölfilterauslaß 12, wobei mindestens eine Kanalverbindung 11 zwischen dem Ölfilterauslaß 12 und dem oberen Fließraum 5 und/oder dem unteren Fließraum 6 angeordnet ist.

Mittels der Kanalverbindung 11, die den Fließraum mit dem Ölfilterauslaß 12 verbindet, kann eine konzentrierte Luftansammlung in strömungsungünstigen Bereichen des Ölfilters kontinuierlich abgeführt werden. Dadurch kann eine Luftansammlung und die auftretenden Probleme beim Ansaugen dieser Luft in die Pumpe mit den nachteiligen Folgen, wie ein Einbruch des Öldruckes oder gar die Beschädigung der Pumpe verhindert werden. Der erfindungsgemäße Saugölfilter gewährleistet, daß die Pumpe kontinuierlich in allen Fahr- und Hydraulikbedingungen eine wesentlich gleichmäßigere Luftverteilung im Öl ermöglicht und somit die Hydraulikbedingungen für den gesamten Kreislauf und für die Pumpe konstant gehalten werden. Dadurch wird die Abstimmung aller Komponenten vereinfacht.

In einer bevorzugten Ausführungsform wird der obere Fließraum 5 mittels einer Abschottrippe 7 in zwei Teilbereiche 5a und 5b getrennt, wobei der Teilbereich 5b eine Luftsammelkammer bildet und direkt mit der Kanalverbindung 11 verbunden ist. Durch die Anbringung einer Abschottrippe wird erreicht, daß sich im Teilbereich 5b angesammelte Luft, die noch nicht über die Kanalverbindung 11 abgesaugt wurde, nicht plötzlich durch Ansteigen des Saugdruckes über den Teilbereich 5a und Ölfilterauslaß 12 auf einmal in die Pumpe gesaugt werden kann.

In einer weiteren bevorzugten Ausführungsform ist in der Abschottrippe 7 mindestens eine Öffnung 8 vorhanden, die die zwei Teilbereiche 5a und 5b des oberen Fließraumes 5 miteinander verbindet. Diese Öffnung 8 der Abschottrippe 7 ermöglicht einen normalen Ölfluß des Öles aus dem Teilbereich 5b in den Teilbereich 5a der oberen Fließkammer zum Ölfilterauslaß 12.

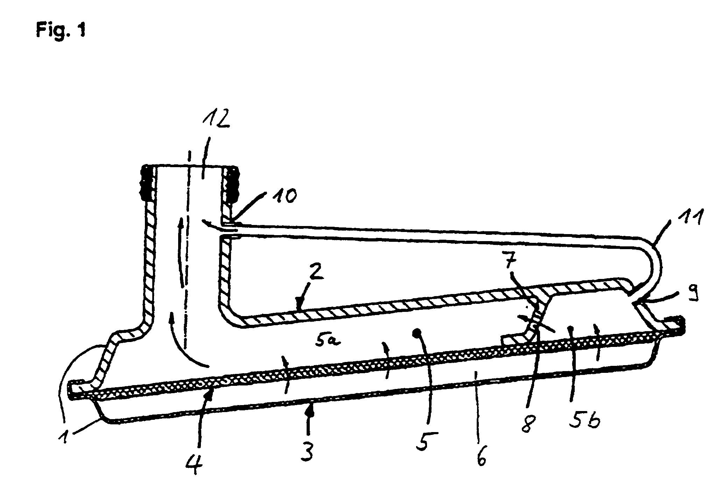

In einer weiteren besonders bevorzugten Ausführungsform ist die Kanalverbindung 11 getrennt von dem Ölfiltergehäuse 1, wie in der Figur 1 gezeigt, ausgebildet und mit den Anschlüssen 9 und 10 am Ölfilterauslaß 12 und am Ölfiltergehäuse 1 angeschlossen. In einer weiteren bevorzugten Ausführungsform ist die Kanalverbindung 11 an das Ölfiltergehäuse 1 angeformt oder kann auch innerhalb des Ölfiltergehäuses angeordnet sein. In weiteren besonders bevorzugten Ausführungsformen ist der Saugölfilter separat angeordnet oder in die Ölwanne integriert. Das folgende Beispiel soll den Gegenstand der Erfindung näher erläutern, ohne daß die Erfindung darauf beschränkt wird.

### Beispiel

- Figur 1: zeigt eine Ansicht des erfindungsgemäßen Saugölfilters im Querschnitt.

Figur 1 zeigt eine Ansicht des erfindungsgemäßen Saugölfilters im Querschnitt. In der Darstellung wird ein Saugölfilter vom Ölfiltergehäuse 1 nach außen hin begrenzt. Innerhalb des Ölfiltergehäuses ist ein Ölfiltermedium 4 angeordnet. Dabei ist ein Fließraum 5 oberhalb des Filtermediums 4 und ein weiterer Fließraum 6 unterhalb des Ölfiltermediums 4 angeordnet. Der Fließraum 5 geht in den Ölfilterauslaß 12 über. Der obere Fließraum 5 ist mittels einer Abschottrippe 7 in zwei Teilbereiche 5a und 5b getrennt. Dabei bildet der Teilbereich 5b eine Luftsammelkammer, die direkt mit der Kanalverbindung 11 verbunden ist. Die Kanalverbindung 11 verbindet den Teilbereich 5b des oberen Fließraumes 5 mit dem Ölfilterauslaß 12. Dabei wird die separat angeordnete Kanalverbindung mittels der Anschlüsse 9 und 11 mit dem Teilbereich 5b und dem Ölfilterauslaß 12 befestigt. Die Abschottrippe 7, die den oberen Fließraum 5 in zwei Teilbereiche 5a und 5b trennt, besitzt eine Öffnung 8. Bei Betrieb des Fahrzeuges fließt das Öl vom unteren Fließraum 6 durch das Filtermedium 4 entweder direkt in den Teilbereich 5a oder in den Teilbereich 5b des oberen Fließraumes Vom Teilbereich 5b gelangt das Öl durch die Öffnung 8 der Abschottrippe 7 in den Teilbereich 5a. Danach gelangt das Öl vom oberen Fließraum in den Ölfilterauslaß 12 zur Pumpe. Ein geringer Ölstrom gelangt vom Teilbereich 5b auch durch die Kanalverbindung 11 zum Ölfilterauslaß 12. Dabei kann die Luft, die sich im aufgeschäumten Öl befindet, im unteren Fließraum 6 und im Teilbereich 5b des oberen Fließraumes 5 ansammeln. Vom unteren Fließraum 6 gelangt die Luft über das Ölfiltermedium 4 in den Teilbereich 5b. Dabei verhindert die Abschottrippe 7, daß größere Luftansammlungen aus dem Teilbereich 5b über den Teilbereich 5a und den Ölfilterauslaß 12 in die Pumpe gelangen. Die im Teilbereich 5b angesammelte Luft wird durch den in der Kanalverbindung 11 herrschenden Unterdruck über diese Kanalverbindung 11 in den Ölfilterauslaß 12 kontinuierlich abgesaugt und dadurch gleichmäßiger im Öl verteilt.

### Bezugszeichenliste

- 1: Ölfiltergehäuse
- 2: Ölfilteroberschale
- 3: Ölfilterunterschale
- 4: Ölfiltermedium
- 5: oberer Fließraum
- 5a: Teilbereich des oberen Fließraumes
- 5b: Teilbereich des oberen Fließraumes (Luftsammelkammer)
- 6: unterer Fließraum
- 7: Abschottrippe
- 8: Öffnung
- 9: Anschluß in Ölfilteroberschale
- 10: Anschluß am Ölfilterauslaß
- 11: Kanalverbindung
- 12: Ölfilterauslaß

## Patentansprüche

1. Saugölfilter für Motoren oder Getriebe oder Automatikgetriebe mit einem Ölfiltergehäuse (1), einem oberhalb des Ölfiltermediums (4) angeordneten Fließraum (5) und einem unterhalb des Ölfiltermediums angeordneten Fließraum (6) und einem Ölfilterauslaß (12), **dadurch gekennzeichnet, daß** mindestens eine Kanalverbindung (11) zwischen dem Ölfilterauslaß (12) und dem oberen Fließraum (5) und/oder dem unteren Fließraum (6) angeordnet ist.

2. Saugölfilter nach Anspruch 1, **dadurch gekennzeichnet, daß** der obere Fließraum (5) mittels einer Abschottrippe (7) in zwei Teilbereiche (5a, 5b) getrennt ist, wobei der Teilbereich (5b) eine Luftsammelkammer bildet und direkt mit der Kanalverbindung (11) verbunden ist.

3. Saugölfilter nach Anspruch 2, **dadurch gekennzeichnet, daß** in der Abschottrippe (7) mindestens eine Öffnung (8) vorhanden ist, die die zwei Teilbereiche (5a, 5b) des oberen Fließraumes (5) miteinander verbindet.

4. Saugölfilter nach den Ansprüchen 1 bis 3, **dadurch gekennzeichnet, daß** die Kanalverbindung (11) getrennt von dem Ölfiltergehäuse (1) ausgebildet ist, und mittels Anschlüsse (9, 10) am Ölfilterauslaß (12) und am Filtergehäuse (1) angeschlossen ist.

5. Saugölfilter nach den Ansprüchen 1 bis 3, **dadurch gekennzeichnet, daß** die Kanalverbindung (11) an das Ölfiltergehäuse (1) angeformt ist, oder innerhalb des Ölfiltergehäuses angeordnet ist.

6. Saugölfilter nach den Ansprüchen 1 bis 5, **dadurch gekennzeichnet, daß** der Saugölfilter separat angeordnet ist oder in die Ölwanne integriert ist.

## Claims

1. Suction oil filter for motors or transmissions or automatic transmissions with an oil filter housing (1), a flow space (5) disposed above the oil filter medium (4), a flow space (6) disposed below the oil filter medium, and an oil filter outlet (12), **characterized by** the fact that at least one channel connection (11) is disposed between the oil filter outlet (12) and the upper flow space (5) and/or the lower flow space (6).

2. Suction oil filter according to Claim 1, **characterized by the fact that** the upper flow space (5) is separated by means of a sealing trip (7) into two partial areas (5a, 5b), where the partial area (5b) forms an air-collecting chamber and is connected directly to the channel connection (11).

3. Suction oil filter according to Claim 2, **characterized by the fact that,** in the sealing trip (7), there is at least one opening (8) which connects the two partial areas (5a, 5b) of the upper flow space (5) to one another.

4. Suction oil filter according to Claims 1 to 3, **characterized by the fact that** the channel connection (11) is formed separated from the oil filter housing (1) and, by means of connections (9, 10), is connected to the oil filter outlet (12) and the oil filter housing (1).

5. Suction oil filter according to Claims 1 to 3, **characterized by** the fact that the channel connection (11) is formed on the oil filter housing (1) or is disposed within the oil filter housing.

6. Suction oil filter according to Claims 1 to 5, **characterized by** the fact that the suction oil filter is disposed separately or is integrated in the oil trap.

## Revendications

1. Filtre à huile à aspiration pour moteur ou boîte de vitesse ou boîte de vitesse automatique, avec un boîtier (1) de filtre à huile, une chambre (5) d'écoulement placée au-dessus du milieu (4) de filtre à huile et une chambre (6) d'écoulement placée au-dessous du milieu de filtre à huile et avec une sortie (12) de filtre à huile, ***caractérisé en ce qu***'au moins une liaison (11) par canal est placée entre la sortie (12) de filtre à huile et la chambre d'écoulement supérieur (5) et/ou la chambre d'écoulement inférieure (6).

2. Filtre à huile à aspiration selon la revendication 1, ***caractérisé en ce que*** la chambre d'écoulement supérieure (5) est séparée par une membrure (7) de cloisonnement en deux zones partielles (5a, 5b), la zone partielle (5b) formant une chambre de collecte d'air et étant reliée directement à la liaison (11) par canal.

3. Filtre à huile à aspiration selon la revendication 2, ***caractérisé en ce que*** dans la membrure (7) de cloisonnement se trouve au moins une ouverture (8) qui relie entre elles les deux zones partielles (5a,5b) de la chambre d'écoulement supérieure (5).

4. Filtre à huile à aspiration selon les revendications 1 à 3, ***caractérisé en ce que*** la liaison (11) par canal est réalisée séparément du boîtier (1) de filtre à huile et est raccordée par des raccords (9, 10) présents sur la sortie (12) de filtre à huile et sur le boîtier (1) de filtre.

5. Filtre à huile à aspiration selon les revendications 1 à 3, ***caractérisé en ce que*** la liaison (11) par canal est formée sur le boîtier (1) de filtre à huile ou est placée à l'intérieur du boîtier de filtre à huile.

6. Filtre à huile à aspiration selon les revendications 1 à 5, ***caractérisé en ce que*** le filtre à huile à aspiration est placé séparément ou est intégré au carter d'huile.
